# FASCICULE DE BREVET EUROPEEN

(11) **EP 1 022 482 B1**
(45) Date de publication et mention de la délivrance du brevet: **27.08.2003**
(21) Numéro de dépôt: 00400023.8
(22) Date de dépôt: 06.01.2000
(51) Int. Cl.: F16D 71/00, B60T 1/00, C21C 5/46

(54) **Dispositif de blocage d'un élément d'une chaîne cinématique**
Feststellorgan für ein Antriebsstrangelement
Locking device for a drive train element

(30) Priorité: 21.01.1999 FR 9900645
(43) Date de publication de la demande: 26.07.2000
(73) Titulaire: COMPAGNIE ENGRENAGES ET REDUCTEURS MESSIAN-DURAND, 59400 Cambrai (FR)
(72) Inventeur: Chichery, Laurent, 58000 Nevers (FR); Faure, Louis, 02110 Premont (FR); Liszczynski, Claude, 58600 Fourchambault (FR)
(74) Mandataire: Lanceplaine, Jean-Claude

(56) Documents cités:
- EP-A- 0 544 116
- EP-A- 0 627 348
- US-A- 3 918 682
- US-A- 3 995 841
- US-A- 4 310 081

## Description

La présente invention a pour objet un dispositif de blocage d'un élément d'une chaîne cinématique, comme par exemple un élément d'une transmission à engrenages.

L'invention a également pour objet une installation de commande du basculement d'une poche d'un convertisseur d'acierie muni d'un tel dispositif de blocage.

Une telle installation est connue par exemple du document US-A- 3 995 841.

Dans différents secteurs industriels, comme par exemple la sidérurgie, les sucreries, les cimenteries, les industries agro-alimentaires ou toutes autres industries, les procédés de fabrication nécessitent l'entraînement en rotation d'un arbre, de tubes ou de cuves de grandes dimensions qui doivent être immobilisés dans des positions déterminées et qui sont souvent soumis à des sollicitations extérieures mécaniques, thermiques ou encore vibratoires.

Généralement, l'entraînement se fait par une couronne dentée ou une roue dentée de grand diamètre montée sur l'élément à entraîner.

Dans certaines applications, le cycle de fonctionnement demande de bloquer énergiquement en position d'arrêt la machine réceptrice qui est soumise à diverses sollicitations.

C'est le cas par exemple de l'injection de fluides gazeux dans un convertisseur ou dans tout autre cuve similaire durant l'élaboration de l'acier ou de tout autre produit avec pour conséquence la présence d'excitations vibratoires importantes sur la chaîne cinématique. En effet, l'injection sous pression de fluides gazeux dans les poches de convertisseur génère des excitations vibratoires et des contraintes de forte intensité susceptibles d'endommager par fatigue les organes de la transmission à engrenages ce qui obligent à surdimensionner certains éléments de cette transmission par un facteur de sécurité supérieur à deux voire à trois.

Ces sollicitations se produisent soit d'une manière continue avec des intensités de charges variables, soit avec des intensités violentes au cours du soufflage des gaz avec une périodicité de quelques minutes.

Selon les nouvelles conceptions des convertisseurs, le centre de gravité de la poche se situe plus ou moins près de son axe de pivotement. La proximité du centre de gravité de l'axe occasionne des intensités vibratoires très importantes et provoque une instabilité dynamique du convertisseur.

Le blocage de l'élément de la chaîne cinématique c'est à dire dans le cas d'un convertisseur la couronne dentée, doit être assuré avec une sécurité totale dans une position angulaire qui doit être précise et sans jeu de débattement angulaire.

On connaît des dispositifs de blocage d'un élément qui assure ce blocage en éliminant le jeu des dentures de la chaîne cinématique d'un réducteur par contact sur les flancs opposés d'un même mobile.

Dans ce cas, les réducteurs sont composés d'une couronne reliée à l'élément à bloquer et entraînée par deux pignons. Sur chacun de ces pignons est monté en bascule un réducteur primaire, l'équilibre des efforts étant réalisé par une barre de compression ou de tension reliant les deux réducteurs primaires.

La mise en contact sans jeu s'opère au moyen d'un vérin hydraulique avec le basculement en sens opposé des deux réducteurs primaires jusqu'à obtenir une précontrainte sur les flancs opposés des dentures.

On connaît un autre dispositif de blocage d'un élément constitué par exemple par une couronne dentée au moyen d'un réducteur à couple divisé qui est composé de deux carters autonomes portant chacun un pignon d'attaque de cette couronne dentée.

L'équilibre des efforts tangentiels entre les deux carters est réalisé à l'aide d'une barre de torsion. La mise en contact des flancs opposés et le blocage de la couronne sont réalisés par le déplacement forcé des deux carters dans la même direction, généralement vers le bas, jusqu'à créer la précontrainte souhaitée.

Ce déplacement s'opère avec un ou deux vérins hydrauliques provoquant le basculement de la barre de torsion.

Dans le cas d'un seul vérin, le dispositif est positionné directement sur la barre de torsion et dans le cas de deux vérins, le dispositif exerce directement l'effort sur chacun des deux carters.

L'invention a pour but de proposer un dispositif de blocage d'un élément d'une chaîne cinématique qui présente l'avantage d'être particulièrement compact, robuste et capable d'immobiliser énergiquement ledit élément à bloquer malgré des sollicitations extérieures mécaniques, thermiques où vibratoires importantes.

L'invention a donc pour objet un dispositif de blocage d'un élément d'une chaîne cinématique, ledit élément comportant une succession de parties en relief et en creux, caractérisé en ce qu'il comprend :
- une pièce munie à sa périphérie de parties en relief et en creux de profil complémentaire aux parties en relief et en creux de l'élément à bloquer et montée à l'extrémité d'un bras dont l'extrémité opposée est articulée autour d'un axe de pivotement,
- un organe de déplacement de ladite pièce entre une position passive dégagée de l'élément à bloquer et une position active dans laquelle les parties en relief et en creux respectivement dudit élément et de ladite pièce s'interpénètrent pour bloquer cet élément dans une position déterminée,
- des moyens d'indexage de la position de l'élément dans ladite position déterminée pour placer les parties en relief en regard des parties en creux respectivement dudit élément et de ladite pièce,
- et des moyens de détection de la position dudit bras.

Selon d'autres caractéristiques de l'invention :
- la pièce est fixée sur l'extrémité correspondante du bras pour former un ensemble monobloc,
- la pièce est montée articulée sur l'extrémité correspondante du bras au moyen d'un axe porté par ledit bras,
- l'organe de déplacement de ladite pièce est formé par un vérin dont l'extrémité libre de la tige de piston est en appui sur une face de cette pièce opposée à celle comportant les parties en saillie et en creux,
- l'appui entre l'extrémité libre de la tige de piston du vérin et ladite pièce est un appui sphérique,
- les moyens d'indexage comprennent, d'une part, une piste ménagée sur ledit élément et comportant une succession de saillies et de creux dont les emplacements correspondent aux parties en saillie et en creux de cet élément et, d'autre part, un organe de détection des saillies et des creux de ladite piste,
- l'organe de détection est formé par un capteur de proximité coopérant avec une tige déplaçable en translation et portant à l'une de ses extrémités un galet roulant sur ladite piste,
- le dispositif comporte des moyens de positionnement en translation du bras portant ladite pièce,
- les moyens de positionnement en translation du bras sont formés par un excentrique ménagé sur l'axe de pivotement dudit bras,
- les moyens de détection de la position du bras sont formés par un capteur monté sur l'axe de pivotement de ce bras,
- l'élément à bloquer est disposé dans un carter,
- l'ensemble formé par la pièce, le bras et l'organe de déplacement de cette pièce est disposé dans le carter ou à l'extérieur de ce carter,
- le carter est muni d'une barre de réaction anti-couple comportant des moyens de réglage de la position de l'élément à bloquer par rapport à une référence de l'installation en modifiant la longueur de ladite barre de réaction.

L'invention a également pour objet une installation de commande du basculement d'une poche d'un convertisseur d'aciérie, du type comprenant une couronne dentée solidaire de l'axe de pivotement de ladite poche et entraînée en rotation par au moins un pignon, caractérisé en ce que ladite couronne comporte au moins un dispositif de blocage tel que mentionné précédemment.

Les caractéristiques et avantages de l'invention apparaîtront au cours de la description qui va suivre, donnée uniquement à titre d'exemple et faite en référence aux dessins annexés, sur lesquels :
- la Fig.1 est une vue schématique en élévation d'un exemple d'un élément d'une chaîne cinématique munie d'un dispositif de blocage conforme à l'invention,
- la Fig.2 est une vue partiellement en coupe d'une partie de la chaîne cinématique de la Fig. 1 et montrant à plus grande échelle un premier mode de réalisation du dispositif de blocage conforme à l'invention,
- la Fig. 3 est une vue de dessus du dispositif de blocage conforme à l'invention,
- la Fig. 4 est une vue schématique en coupe selon la ligne 4-4 de la Fig.1,
- la Fig.5 est une vue en coupe selon la ligne 5-5 de la Fig. 1,
- la Fig. 6 est une vue schématique en coupe des moyens d'indexage de la position de l'élément à bloquer de la chaîne cinématique,
- la Fig. 7 est une vue schématique en coupe d'un second mode de réalisation du dispositif de blocage conforme à l'invention,
- la Fig.8 est une vue schématique en élévation d'une variante d'une chaîne cinématique équipée d'un dispositif de blocage conforme à l'invention.

Dans la description qui suit, la description du dispositif de blocage d'un élément d'une chaîne cinématique sera faite, à titre d'exemple, pour une installation de commande du basculement d'une poche d'un convertisseur d'élaboration d'acier.

Le dispositif de blocage selon l'invention peut être utilisé pour immobiliser tout élément d'une chaîne cinématique de diverses installations et utilisée par exemple dans la sidérurgie, les sucreries, les cimenteries, les industries agro-alimentaires ou tout autre industrie.

D'une manière générale, l'élément à bloquer de la chaîne cinématique comporte une succession de parties en relief et en creux. Dans l'exemple de réalisation représenté sur les figures, cet élément à bloquer est constitué par une couronne dentée désignée par la référence générale 1 qui est munie à sa périphérie d'une succession de parties en relief 2 et de creux 3.

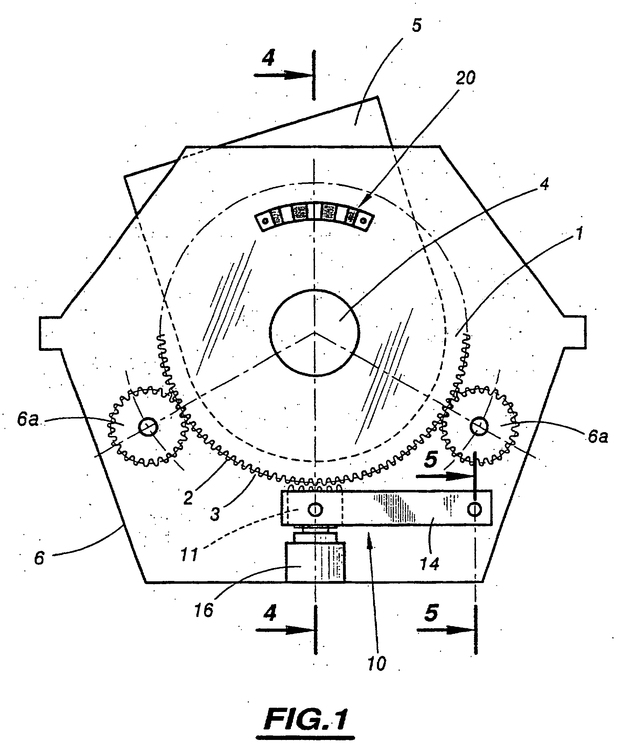

Ainsi que représenté schématiquement à la Fig. 1, cette couronne dentée 1 est reliée directement à un axe 4 d'une poche 5 à basculer ou à entraîner en rotation.

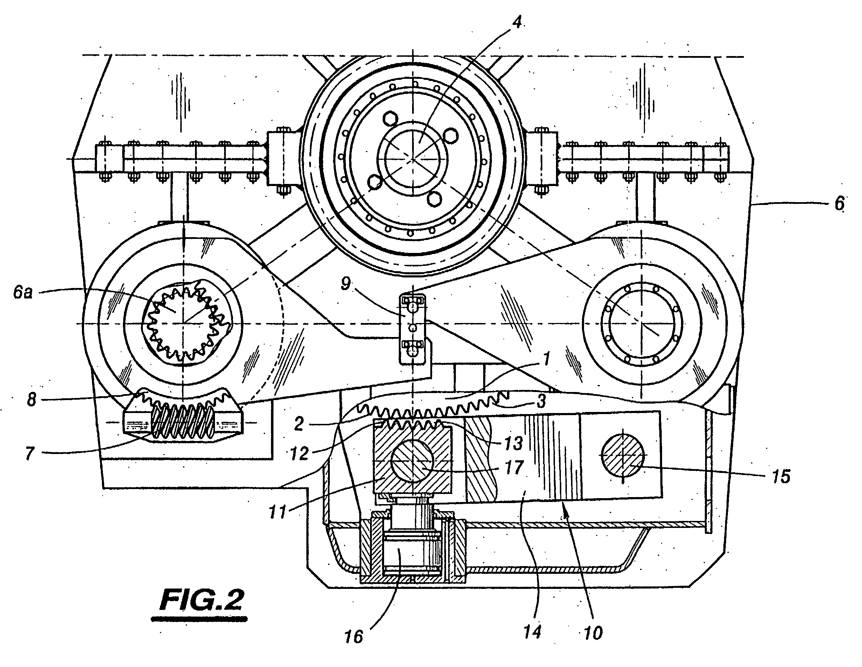

A cet effet et comme représenté sur les Figs. 1 et 2, la couronne dentée 1 est associée à un dispositif d'entraînement en rotation qui se compose d'un réducteur à couple divisé qui comporte un carter principal 6 dans lequel sont montés ladite couronne dentée 1 et deux pignons 6a engrénant avec cette dernière.

De manière classique, les arbres d'entrée 7 (Fig.2) des réducteurs primaires à axe orthogonaux engrènent avec une roue primaire 8 solidaire en rotation avec le pignon 6a correspondant.

Les carters de ces réducteurs primaires sont reliés entre eux par un bras articulé 9 équilibrant ainsi les couples d'entraînement et les arbres d'entrée 7 sont liés en rotation par une transmission coulissante à cardan ou à denture bombée, non représentée, assurant ainsi la division de puissance.

La.chaîne cinématique comporte un dispositif de blocage d'un des éléments qui dans l'exemple décrit est constitué par la couronne dentée 1 de façon à immobiliser en rotation la poche 5 du convertisseur dans une position déterminée par exemple pour le soufflage des gaz.

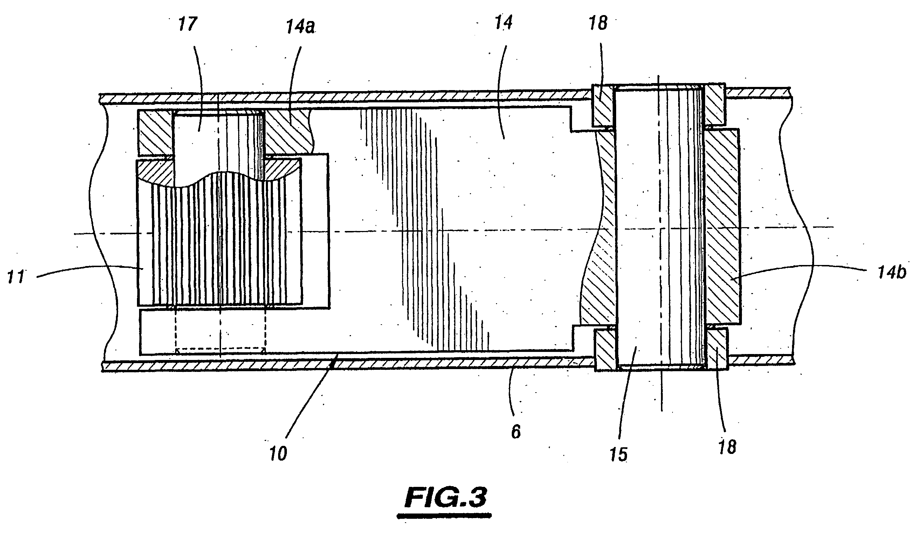

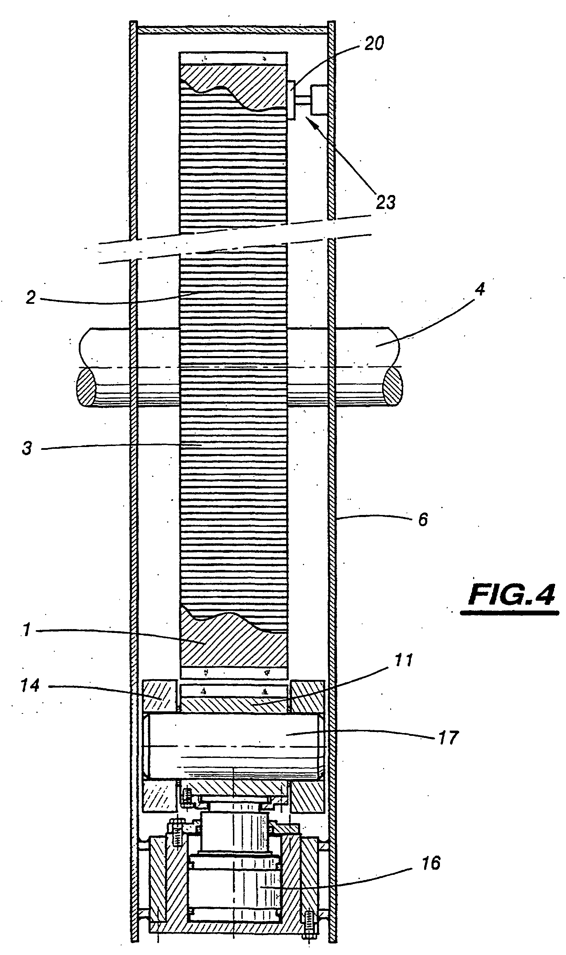

Ainsi que représenté notamment aux Figs. 2 à 4, le dispositif de blocage désigné dans son ensemble par la référence 10 comprend une pièce 11 munie à sa périphérie de parties en relief 12 et en creux 13 de profil complémentaire aux parties en relief 2 et en creux 3 de la couronne 1 à bloquer.

Cette pièce 11 est montée à l'extrémité 14a d'un bras 14 dont l'extrémité opposée 14b est articulée autour d'un axe de pivotement 15.

Ainsi, la pièce 11 est déplaçable par basculement du bras 14 autour de l'axe 15 sous l'action d'un organe 16 entre une position passive dégagée de la roue 1 et une position active dans laquelle les parties en relief 2 et 12 et en creux 3 et 13 respectivement de la roue 1 et de la pièce 11 s'interpénètrent pour bloquer cette roue 1 dans la position déterminée, comme on le verra ultérieurement.

Dans l'exemple de réalisation représenté sur les figures, la pièce 11 est montée articulée sur l'extrémité 14a du bras 14 au moyen d'un axe 17 porté par ce bras 14.

Selon une variante, la pièce 11 est fixée directement sur l'extrémité 14a du bras 14 pour former un ensemble monobloc.

Le dispositif de blocage 10 est disposé à l'intérieur du carter 6 et dans ce cas les paliers 18 portant l'axe 15 sont solidaires dudit carter 6.

Selon une variante, le dispositif de blocage 10 peut être disposé à l'extérieur du carter 6.

L'organe de déplacement 16 de la pièce 11 est constitué par un vérin dont l'extrémité libre de la tige de piston est en appui sur une face de cette pièce 11 opposée à celle comportant les parties en saillie 12 et en creux 13.

De préférence, l'appui entre l'extrémité libre de la tige de piston du vérin 16 et la pièce 11 est un appui sphérique.

Le vérin 16 est un vérin hydraulique ou pneumatique. L'organe de déplacement de la pièce 11 peut être constitué par tout autre système approprié, comme par exemple un système mécanique ou élastique.

Par ailleurs, le dispositif de blocage 10 comporte des moyens d'indexage de la position de la couronne 1 à bloquer dans la position déterminée pour placer les parties en relief 2 de ladite couronne 1 en regard des parties en creux 13 de la pièce 11 et des moyens de détection de la position du bras 14 portant cette pièce 11.

Ainsi que représenté sur les figures 1, 2, 4 et 6, les moyens d'indexage de la position de la couronne 1 comprennent une piste 20 ménagée sur une face latérale de ladite couronne et comportant une succession de saillies 21 et de creux 22 à des emplacements correspondant aux parties en saillie 12 et en creux 13 de la couronne 1.

Les moyens d'indexage de la position de cette couronne 1 comprennent également un organe de détection 23 des saillies 21 et des creux 22 de la piste 20.

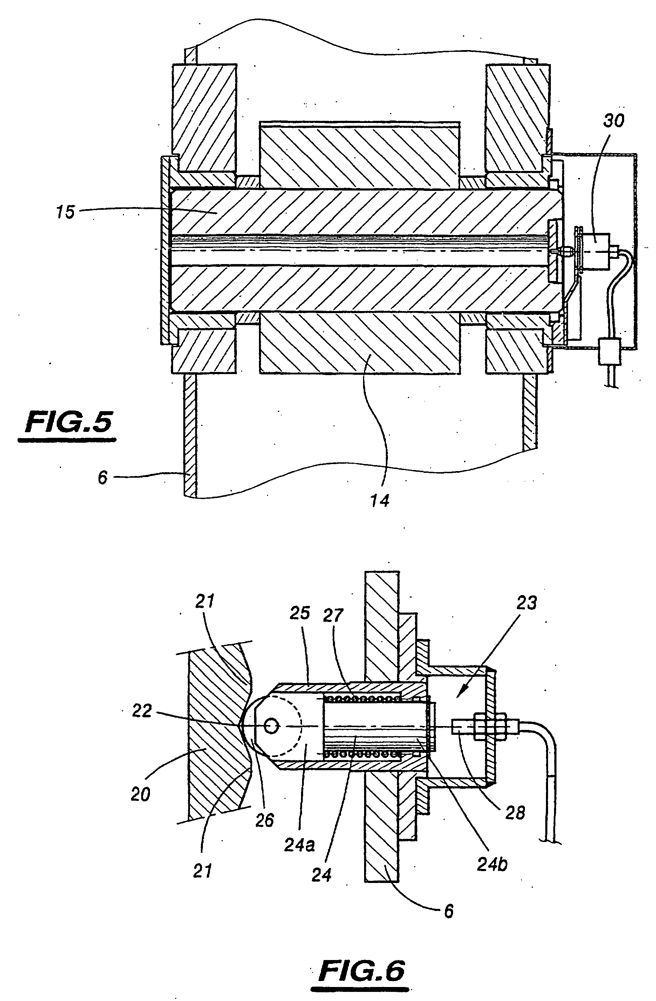

Comme représenté à la Fig. 6, l'organe de détection 23 est. formé par une tige 24 montée coulissante dans un support 25 fixé sur le carter 6.

Cette tige 24 porte, à l'une 24a de ses extrémités, un galet 26 monté libre en rotation et qui est maintenu en appui sur la piste 20 au moyen d'un ressort 27 agissant sur la tige 24.

L'extrémité 24b de la tige 24 coopère avec un capteur de proximité 28 qui détecte les déplacements de ladite tige 24 lorsque le galet 26 roule sur les saillies 21 et les creux 22 de la piste lors de la rotation de la couronne 1.

Le capteur de proximité 28 commande l'arrêt en position angulaire de la couronne 1.

Les moyens de détection de la position du bras 14 sont formés par un codeur 30 monté sur l'axe 15 de pivotement de ce bras 14 et qui détecte par l'intermédiaire dudit bras 14 la position de sortie de la tige de piston du vérin 16 et qui informe donc sur la position relative de la pièce 11 par rapport à la couronne 1.

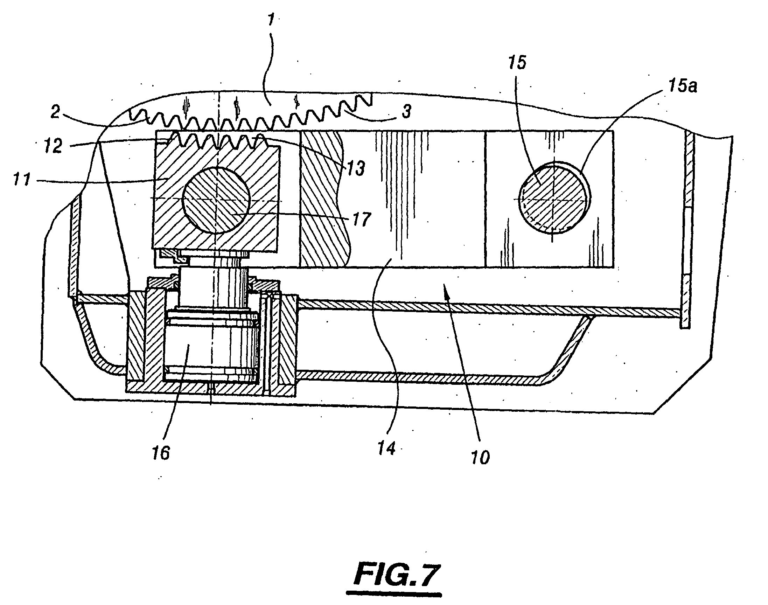

Selon une variante représentée à la Fig. 7, l'axe 15 de pivotement du bras 14 comporte un excentrique 15a qui permet d'assurer un déplacement tangentiel des parties en relief 12 et en creux 13 de la pièce 11 par rapport aux parties en relief 2 et en creux 3 de la couronne 1.

L'excentrique 15a est actionné par exemple par un levier ou au moyen d'une motorisation et le déplacement tangentiel de la pièce 11 associé à la poussée du vérin 16 assure la pénétration totale et le blocage de la couronne 1 par la pièce 11.

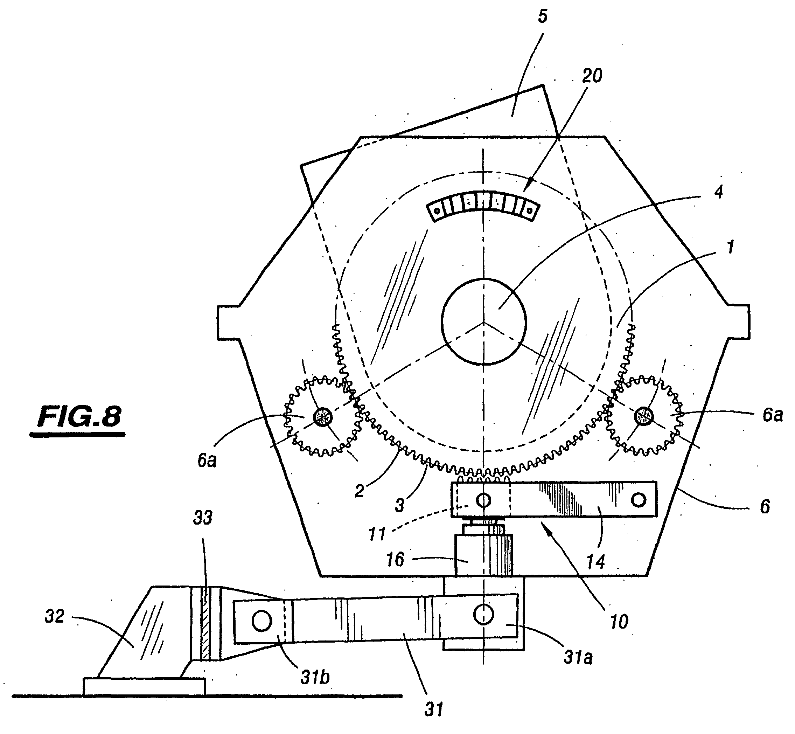

Enfin, selon une variante représentée à la Fig. 8, le carter 6 est muni d'une, barre 31 de réaction anti-couple dont une première extrémité 31a est ,montée articulée sur le carter 6 et dont une seconde extrémité 31b est montée articulée sur un support 32.

Cette barre 31 permet d'équilibrer le couple de basculement exercé sur l'arbre 4 de la poche 5 du convertisseur.

D'autre part, la barre 31 comporte des moyens de réglage de la position de la couronne 1 par rapport à une référence de l'installation en modifiant par exemple la longueur de cette barre.31.

La modification de la longueur de la barre de réaction 31 peut être obtenue par tout dispositif approprié comme par exemple par des cales 33 de différentes épaisseurs placées dans le support 32.

Lorsque le procédé exige que la poche 5 du convertisseur soit immobilisée en rotation par exemple pour le soufflage des gaz dans cette poche, le dispositif de blocage 10 est-activé.

Le prépositionnement angulaire de la poche 5 est déjà donné par un codeur, non représenté, monté sur l'un des arbres de la chaîne cinématique.

La position angulaire finale entre la couronne 1 et la pièce 11 de blocage est obtenue à l'aide des saillies 21 et des creux 22 de la pisté 20 dont les positions sont déterminées de telle sorte qu'elles correspondent à une partie en saillie 2 ou une partie en creux 3 de la couronne 1.

Le galet 26 monté à l'extrémité de la tige 24 roule sur la piste 20.

Le capteur de proximité 28 détecte une saillie 21 ou un creux 22 de la piste 20 par le déplacement axial de la tige 24 et commande l'arrêt en position angulaire de. la couronne 1 pour que les parties en saillie 2 de cette couronne 1 se trouvent en face des parties en creux 13 de la pièce de blocage 11.

La couronne 1 à l'arrêt est maintenue en position par un dispositif de frein classique, non représenté.

La tête des parties en saillie 12 de la pièce 11 porte des dépouilles dites surfaces d'entrée de telle sorte que si les sommets des parties en saillie 2 de la couronne 1 se trouvent proches des sommets des parties en saillie de la pièce 11 et viennent en contact lors de l'action du vérin 16, le moindre couple résiduel lors du desserrage des freins occasionnera la rotation de la couronne 1 qui associée à la pression fournie par ledit vérin 16 provoquera l'interpénétration totale des parties en saillie 2 et 12 et des parties en creux 3 et 13 respectivement de la couronne 1 et de la pièce 11.

Lors de l'actionnement du vérin 16 pour bloquer la couronne 1 par la pièce 11, le codeur 30 monté sur l'axe 15 de pivotement du bras 14 détecte, par l'intermédiaire de la position angulaire de ce bras 14, la position de sortie de la tige de piston du vérin 16 et informe ainsi sur la position relative de la pièce 11 par rapport à la couronne 1.

Les informations fournies correspondent aux désengagement total ou au préengagement ou encore à l'engagement total en position de blocage de la pièce 11 par rapport à la couronne 1.

Si lors de. la phase d'engagement de la pièce 11 commandée par le vérin 16, à une pression prédéfinie, la position du préengagement de la pièce 11 mesurée par le codeur 30 n'est pas atteinte au bout d'un temps de temporisation prédéterminé, l'information indique une anomalie de positionnement par exemple dans le cas où les parties en saillie 2 et 12 respectivement de la couronne 1 et de la pièce 11 sont en face les unes des autres, l'enclenchement devient impossible et les actionneurs commandent la sécurité d'arrêt de l'installation.

Par contre, dans le cas où l'information fournie par le codeur 30 indique que les parties en saillie 2 de la couronne 1 sont en regard des parties en creux 13 de la pièce 11, la tige de piston du vérin 16 poursuit sa course de telle manière que les parties en saillie 2 et 12 et en creux 3 et 13 respectivement de la couronne 1 et de la pièce 11 s'interpénètrent totalement pour immobiliser en rotation la couronne 1 et de ce fait la poche 5 du convertisseur.

Dans le cas où le dispositif de blocage 10 est équipé de l'excentrique 15a sur l'arbre 15 de pivotement du bras 14, l'excentrique 15a est actionné soit par un levier, soit à l'aide d'une motorisation lorsque le codeur 30 détecte un positionnement des parties en saillie 2 et 12 respectivement de la couronne 1 et de la pièce 11 en regard les unes des autres.

Ainsi, le déplacement tangentiel du bras 14 et de la pièce 11 associé à la poussée du vérin 16 assure l'interpénétration totale des parties en saillie et en creux de la couronne 1 et de la pièce 11 et le blocage de ladite couronne 1.

Lors de cette opération, les freins de l'installation sont relâchés.

Cette variante n'est possible que si la pièce 11 est montée articulée sur le bras 14 au moyen de l'axe 17.

Dans le cas où la pièce 11 est solidaire du bras 14 pour former un ensemble monobloc, les alésages de réception de l'axe 15 sont usinés avec le bras 14 situé à l'intérieur du carter 6, les, parties en saillie et en creux de la couronne 1 et de la pièce 11 étant engagées et pressées les unes contre les autres.

Le dispositif de blocage selon l'invention n'occasionne aucune surcontrainte dans la chaîne cinématique, grâce à ces liaisons articulées et les parties en relief et en creux respectivement de la couronne et de la pièce de blocage s'autoalignent de façon à obtenir une répartition uniforme de l'effort de blocage transmis par le vérin.

L'effort de poussée de précontrainte radiale sur les parties en saillie de la couronne est ajusté en fonction des conditions d'exploitation.

La couronne à bloquer peut être équipée de plusieurs dispositifs de blocage uniformément répartis sur sa périphérie.

Le dispositif de blocage conforme à l'invention assure un blocage de l'élément correspondant avec une sécurité totale ainsi qu'une position angulaire de cet élément précise et sans jeu de battement angulaire.

## Revendications

1. Dispositif de blocage d'un élément (1) d'une chaîne cinématique, ledit élément (1) portant une succession de parties en relief (2) et en creux (3), **caractérisé en ce qu'**il comprend :
- une pièce (11) munie à sa périphérie de parties en relief (12) et en creux (13) de profil complémentaire aux parties en relief (2) et en creux (3) de l'élément (1) à bloquer et montée à l'extrémité (14a) d'un bras (14) dont l'extrémité opposée (14b) est articulée autour d'un axe de pivotement (15),
- un organe (16) de déplacement de ladite pièce (11) entre une position passive dégagée de l'élément (1) à bloquer et une positon active dans laquelle les parties en relief (2 ; 12) et en creux (3 ; 13) respectivement dudit élément (1) et de ladite pièce (11) s'interpénètrent pour bloquer cet élément (1) dans une position déterminée,
- des moyens (20,23) d'indexage de la position de l'élément (1) dans ladite position déterminée pour placer les parties en relief (2 ; 12) en regard des parties en creux (3 ; 13) respectivement dudit élément (1) et de la dite pièce (11),
- - et des moyens (30) de détection de la position dudit bras (14).

2. Dispositif selon la revendication 1, **caractérisé en ce que** la pièce (11) est fixée sur l'extrémité (14a) correspondante du bras (14) pour former un ensemble monobloc.

3. Dispositif selon la revendication 1, caraçtérisé en ce que la pièce (11) est montée articulée sur l'extrémité (14a) correspondante du bras (14) au moyen d'un axe (17) porté par ledit bras (14).

4. Dispositif selon l'une quelconque des revendications 1 à 3, **caractérisé en ce que** l'organe de déplacement de la pièce (11) est formé par un vérin (16) dont l'extrémité libre de la tige de piston est en appui sur une face de cette placé (11) opposée à celle comportant les parties en saillie (12) et en creux (13).

5. Dispositif selon la revendication 4, **caractérisé en ce que** l'appui entre l'extrémité libre de la tige de piston du vérin (16) et ladite pièce (11) est un appui sphérique.

6. Dispositif selon la revendication 1, **caractérisé en ce que** les moyens d'indexage comprennent, d'une part, une piste (20) ménagée sur ledit élément (1) et comportant une succession de saillies (21) et de creux (22) dont les. emplacements correspondent aux parties en saillie (2) et en creux (3) de cet élément (1) et, d'autre part, un organe (23) de détection des saillies (21) et des creux (22) de ladite piste (20).

7. Dispositif selon la revendication 6, **caractérisé en ce que** l'organe de détection (23) est formé par un capteur de proximité (28) coopérant avec une tige (24) déplaçable en translation et portant à l'une de ses extrémités un galet (26) roulant sur ladite piste (20).

8. Dispositif selon l'une quelconque des revendications 1 à 3,**caractérisé en ce qu'**il comporte des moyens (15 ; 15a) de positionnement en translation du bras (14) portant ladite pièce (11).

9. Dispositif selon la revendication 8, **caractérisé en ce que** les moyens de positionnement en translation du bras (14) sont formés par un excentrique (15a) ménagé sur l'axe (15) de pivotement dudit bras (14).

10. Dispositif selon la revendication 1, **caractérisé en ce que** les moyens de détection de la position du bras (14) sont formés par un codeur (30) monté sur l'axe de pivotement (15) de ce bras (14).

11. Dispositif selon l'une quelconque des revendications précédentes, **caractérisé en ce que** l'élément (1) à bloquer est disposé dans un carter (6).

12. Dispositif selon l'une quelconque des revendications précédentes, **caractérisé en ce que** l'ensemble formé par la pièce (11), le bras (14) et l'organe de déplacement (16) de cette pièce (11) est disposé dans le carter (6).

13. Dispositif selon l'une quelconque des revendications 1 à 11, **caractérisé en ce que** l'ensemble formé par la pièce (11), le bras (14) et l'organe de déplacement (16) de cette pièce (11) est disposé à l'extérieur du carter (6).

14. Dispositif selon l'une quelconque des revendications précédentes, **caractérisé en ce que** le carter (6) est muni d'une barre (31) de réaction anti-couple comportant des moyens (33) de réglage de la position de l'élément (1) à bloquer par rapport à une référence de l'installation en modifiant la longueur de ladite barre de réaction (31).

15. Installation de commande de basculement d'une poche (5) d'un convertisseur d'aciérie, du type comprenant une couronne dentée (1) solidaire d'un axe (4) de pivotement de ladite poche (5) et entraînée en rotation par au moins un pignon, **caractérisée en ce que** ladite couronne (1) comporte au moins un dispositif de blocage (10) selon l'une quelconque des revendications précédentes.

## Patentansprüche

1. Feststellorgan für ein Element (1) einer kinematischen Kette, wobei das Element (1) eine Abfolge von Erhebungen (2) und Vertiefungen (3) trägt, **dadurch gekennzeichnet, dass** es folgendes umfasst:
- ein Teil (11), das an seiner Peripherie mit Erhebungen (12) und Vertiefungen (13) eines Profils versehen ist, das zu den Erhebungen (2) und Vertiefungen (3) des festzustellenden Elements (1) komplementär ist, und am Ende (14a) eines Arms (14) angeordnet ist, dessen gegenüberliegendes Ende (14b) um eine Schwenkachse (15) gelenkig angeordnet ist,
- ein Organ (16) zum Verstellen des Teils (11) zwischen einer passiven Position ohne Eingriff mit dem festzustellenden Element (1) und einer aktiven Position, in der die jeweiligen Erhebungen (2; 12) und Vertiefungen (3; 13) des Elements (1 und des Teils (11) ineinander eingreifen, um das Element (1) in einer vorgegebenen Position festzustellen,
- Mittel (20, 23) zum Positionieren des Elements (1) in der vorgegebenen Position, um die jeweiligen Erhebungen (2; 12) gegenüber den jeweiligen Vertiefungen (3; 13) des Elements (1) und des Teils (11) anzuordnen,
- und Mittel (30) zum Erfassen der Position des Arms (14).

2. Feststellorgan nach Anspruch 1, **dadurch gekennzeichnet, dass** das Teil (11) auf dem zugeordneten Ende (14a) des Arms (14) befestigt ist, um eine einteilige Einheit zu bilden.

3. Feststellorgan nach Anspruch 1, **dadurch gekennzeichnet, dass** das Teil (11) auf dem zugeordneten Ende (14a) des Arms (14) mittels einer Achse (17) gelenkig montiert ist, die vom Arm (14) gehalten wird.

4. Feststellorgan nach einem der Ansprüche 1 bis 3, **dadurch gekennzeichnet, dass** das Organ zum Verstellen des Teils (11) von einem Zylinder (16) gebildet wird, dessen freies Kolbenstangenende auf einer Oberfläche des Teils (11) aufliegt, die derjenigen gegenüberliegt, welche die Erhebungen (12) und Vertiefungen (13) umfasst.

5. Feststellorgan nach Anspruch 4, **dadurch gekennzeichnet, dass** die Abstützung zwischen dem freien Ende der Kolbenstange des Zylinders (16) und dem Teil (11) eine kugelförmige Abstützung ist.

6. Feststellorgan nach Anspruch 1, **dadurch gekennzeichnet, dass** die Mittel zum Positionieren einerseits eine Lauffläche (20) umfassen, die auf dem Element (1) angeordnet ist und eine Abfolge von Vorsprüngen (21) und Vertiefungen (22) aufweist, deren Lage den Erhebungen (2) und Vertiefungen (3) des Elements (1) entspricht und, andererseits, ein Organ (23) zum Erfassen der Vorsprünge (21) und der Vertiefungen (22) der Lauffläche (20) umfassen.

7. Feststellorgan nach Anspruch 6, **dadurch gekennzeichnet, dass** das Organ (23) zum Erfassen von einem Näherungsfühler (28) gebildet ist, der mit einer Stange (24) zusammenwirkt, die längsverschieblich ist und an einem ihrer Enden eine Walze (26) umfasst, die auf der Lauffläche (20) abrollt.

8. Feststellorgän nach einem der Ansprüche 1 bis 3, **dadurch gekennzeichnet, dass** es Mittel (15; 15a) zum translatorischen Positionieren des Arms (14) umfasst, der das Teil (11) trägt.

9. Feststellorgan nach Anspruch 8, **dadurch gekennzeichnet, dass** die Mittel zum translatorischen Positionieren des Arms (14) von einem Exzenter (15a) gebildet sind, der auf der Schwenkachse (15) des Arms (14) eingerichtet ist.

10. Feststellorgan nach Anspruch 1, **dadurch gekennzeichnet, dass** die Mittel zum Erfassen der Position des Arms (14) von einem Codierer (30) gebildet sind, der auf der Schwenkachse (15) des Arms (14) installiert ist.

11. Feststellorgan nach einem der vorhergehenden Ansprüche, **dadurch gekennzeichnet, dass** das festzustellende Element (1) in einem Gehäuse (6) angeordnet ist.

12. Feststellorgan nach einem der vorhergehenden Ansprüche, **dadurch gekennzeichnet, dass** die aus dem Teil (11), dem Arm (14) und dem Organ (16) zum Verschieben des Teils (11) gebildete Einheit im Gehäuse (6) angeordnet ist.

13. Feststellorgan nach einem der Ansprüche 1 bis 11, **dadurch gekennzeichnet, dass** die aus dem Teil (11), dem Arm (14) und dem Organ (16) zum Verschieben des Teils (11) gebildete Einheit außerhalb des Gehäuses (6) angeordnet ist.

14. Feststellorgan nach einem der vorhergehenden Ansprüche, **dadurch gekennzeichnet, dass** das Gehäuse (6) mit einer Reaktionsmomentschutzstange (31) versehen ist, die Mittel (33) zum Einstellen der Position des festzustellenden Elements (1) in Bezug auf einen Bezugspunkt der Einrichtung unter Veränderung der Länge der Schutzstange (31) umfasst.

15. Einrichtung zum Steuern des Kippens einer Pfanne (5) eines Stahlwerkkonverters des Typs, der einen Zahnkranz (1) umfasst, der fest mit einer Achse (4) zum Schwenken der Pfanne (5) verbunden ist und in Drehrichtung von mindestens einem Ritzel angetrieben wird, **dadurch gekennzeichnet, dass** der Kranz (1) mindestens ein Feststellorgan (10) nach einem der vorhergehenden Ansprüche umfasst.

## Claims

1. Locking device for a drive train element, the said element (1) carrying a series of raised parts (2) and depressed parts (3), **characterised in that** it comprises:
- a component (11) provided at its periphery with raised parts (12) and depressed parts (13) of complementary profile to the raised parts (2) and depressed parts (3) of the element (1) to be locked, and fitted at the end (14a) of an arm (14) whose opposite end (14b) is articulated about a pivotal axis (15),
- a member (16) for displacing the said component (11) between a free, inactive position of the element (1) to be locked and an active position where the raised parts (2; 12) and the depressed parts (3, 13) respectively of the said element (1) and of the said component (11) interengage to lock this element (1) in a determined position,
- means (20, 23) for indexing the position of the element (1) in the said determined position to place the raised parts (2; 12) opposite the depressed parts (3; 13) respectively of the said element (1) and of the said component (11),
- and means (30) for detecting the position of the said arm (14).

2. Device according to claim 1, **characterised in that** the component (11) is secured on the corresponding end (14a) of the arm (14) to form a unitary assembly.

3. Device according to claim 1, **characterised in that** the component (11) is mounted in an articulated manner on the corresponding end (14a) of the arm (14) by means of an axis (17) carried by the said arm (14).

4. Device according to any of claims 1 to 3, **characterised in that** the displacement member of the component (11) consists of an actuator (16), of which the free end of the piston rod abuts onto the face of this component (11) opposite the face comprising the raised parts (12) and depressed parts (13).

5. Device according to claim 4, **characterised in that** the support between the free end of the piston rod of the actuator (16) and the said component (11) is a spherical support.

6. Device according to claim 1, **characterised in that** the indexing means comprise, firstly, a track (20) arranged on the said element (1) and comprising a succession of projections (21) and grooves (22) whose positions correspond to the raised parts (2) and the depressed parts (3) of this element (1) and, secondly, a member (23) for detecting the projections (21) and grooves (22) of the said track (20).

7. Device according to claim 6, **characterised in that** the detection member (23) comprises a proximity sensor (28) co-operating with a rod (24) moveable in translation and carrying, at one end, a roller (26) that rolls on the said track (20).

8. Device according to any of claims 1 to 3, **characterised in that** it comprises translation positioning means (15; 15a) for the arm (14) carrying the said component (11).

9. Device according to claim 8, **characterised in that** the translation positioning means of the arm (14) consists of an eccentric (15a) arranged on the pivotal axis (15) of the said arm (14).

10. Device according to claim 1, **characterised in that** the means for detecting the position of the arm (14) consist of a converter (30) fitted on the pivotal axis (15) of this arm (14).

11. Device according to any of the preceding claims, **characterised in that** the element (1) to be locked is arranged in a casing (6).

12. Device according to any of the preceding claims, **characterised in that** the unit consisting of the component (11), the arm (14) and the displacement member (16) of this component (11) is arranged inside the casing (6).

13. Device according to any of claims 1 to 11, **characterised in that** the unit consisting of the component (11), the arm (14) and the displacement member (16) of this component (11) is arranged outside the casing.

14. Device according to any of the preceding claims, **characterised in that** the casing (6) is provided with an anti-torque reaction bar (31), comprising means (33) for regulating the position of the element (1) to be locked relative to an installation reference by modifying the length of the said reaction bar (31).

15. Installation for controlling the tilting of a ladle (5) in a steel-works converter of the type comprising a ring gear (1) integral with a pivotal axis (4) of the said ladle (5) and driven in rotation by at least one pinion, **characterised in that** the said ring (1) comprises at least one locking device (10) according to any of the preceding claims.
